# EUROPEAN PATENT SPECIFICATION

(11) **EP 3 362 932 B1**
(45) Date of publication and mention of the grant of the patent: **01.05.2019**
(21) Application number: 16791693.1
(22) Date of filing: 14.10.2016
(51) Int. Cl.: G06F 21/10

(54) **A METHOD FOR THE UNIQUE IDENTIFICATION OF A DEVICE AND FOR THE UPDATES OF THE FIRMWARE AND HARDWARE USING AN ENCRYPTED CODE**
VERFAHREN ZUR EINDEUTIGEN IDENTIFIZIERUNG EINER VORRICHTUNG UND ZUR AKTUALISIERUNG DER FIRMWARE UND HARDWARE MIT EINEM VERSCHLÜSSELTEN CODE
PROCÉDÉ D'IDENTIFICATION UNIQUE D'UN DISPOSITIF ET DE MISE À JOUR DU MICROLOGICIEL ET DU MATÉRIEL À L'AIDE D'UN CODE CRYPTÉ

(30) Priority: 16.10.2015 IT UB20155127
(43) Date of publication of application: 22.08.2018
(73) Proprietor: Apteon S.r.l., 56023 Cascina (PI) (IT)
(72) Inventor: DE MARINIS, Marco, 56023 Cascina (Pisa) (IT)
(74) Representative: Brazzini, Silvia
(86) International application number: PCT/IB2016/056169
(87) International publication number: WO 2017/064663

(56) References cited:
- WO-A1-98/42098
- WO-A2-02/01335
- US-A1- 2010 325 735

## Description

### Field of the invention

The present invention relates to a method for the encrypting of executable applications by means of a microcontroller contained in an electronic device, in particular in an embedded system that manages a generic product.

More in detail, the invention relates to a method for transferring an application in a univocally identified electronic device by means of one of the communication channels of the same device, so as to not allow the fraudulent execution of this application on such device or on an identical or similar device, in a way not authorized by the manufacturer or by the distributor of the application.

### State of the art

Most of the products of common usage comprise physical mechanisms, i.e. hardware devices that are controlled through a firmware executed by a microcontroller unit that suitably manages several electronic interfaces.

Among the electronic devices, the "embedded" systems are increasingly used, i.e. electronic devices comprising at least one microcontroller component, i.e. an electronic component that contains, on a same production chip, a memory where the code that has to be executed, i.e. the "firmware", is memorised, and various communication peripherals and circuits that are functional to the product.

The firmware is playing a key role in the above mentioned electronic products. The protection of the application and of the contained Firmware is a strategic aspect of the intellectual property management of a company.

Recently many microcontroller-based silicon chips have been introduced on the market, some of which are reconfigurable, i.e. they can modify the embedded analog and digital circuits by means of re-programming and reconfiguration steps. Such chips are capable not only of executing the instructions of the embedded firmware, but can also modify their internal hardware circuits by means of a simple reconfiguration step.

In the case of microcontroller systems that embed the aforesaid reconfigurable circuits, "open" electronic devices can be designed, i.e. devices in which the firmware can, by suitable instructions, modify the embedded electronic circuits and fit it on a specific final product. This reconfiguration can be carried out both at product manufacturing and, dynamically, once the product has been sold or even installed on the field.

For an embedded system, the firmware to be executed is collected in a single application image, i.e. in a file containing a succession of numeric codes, in which at least one application and at least one configuration of the hardware components of the embedded system are located. The application image makes it possible to transfer in a single data-block all the data that are needed for a proper set-up of the microcontroller, or for adding new applications to the data already present in the microcontroller's embedded memory.

If the application image contains all the functional modules that are necessary for fully controlling the product, the embedded system provides a minimal portion of the firmware, called BootLoader, which is pre-loaded when the chip is manufactured, for loading the image and for the whole Hardware and Firmware configuration of the embedded system.

Instead, if the application image contains only one or more applications and one or more hardware configurations, where such functions are needed to add a new functionality to the product, the embedded system include a firmware module, called Linker, which makes it possible to add the received application to the embedded firmware. Such capability is needed in order to allow third parts, for example companies or developers, to dynamically add new functional modules to the already memorised base firmware.

In both cases, the application executed by the microcontroller reads the application image and extracts the hardware configurations and the executable Firmware section. With such extracted data, the embedded application reconfigures the programmable analog and digital circuits and, at the same time, transfers the firmware code into the memory area where the microcontroller can execute the received application.

The application images can be pre-loaded, at the time of manufacture, in a special parking area on-chip or on an external parking area, such as a RAM, EEPROM, FLASH memory, and the like. Using another methodology, the application images can be loaded dynamically using an external resource, for example through an Internet connection, a USB key, a SD card, a user interface, and the like, and can be stored into one of the aforesaid parking areas.

Almost all microcontrollers contain a univocal identifier, which is represented by a non-modifiable digital number that uniquely identifies the microcontroller itself. This identifier is normally used by the silicon chip manufacturers in order to trace the wafer production process. Almost always, this identifier is a digital code that increases progressively with the manufacturing date of the silicon chip, and can contain other typical parameters of the production process.

Techniques are known for transferring application images onto electronic devices, in which an encrypted application image is directly created in the electronic board of an electronic device, in order to prevent such application image from being read out or copied onto other devices. Using this method, it is not possible, for distinct devices and for distinct applications, nor the control of the encryption key nor the control of the application image encryption.

Symmetric key techniques for encrypting of application images are known, in which the manufacturer/distributor generates an encryption and decryption key used by an electronic device for encrypting and decrypting the application image, respectively. Such key is independently generated from the electronic device, therefore, if an encryption/decryption key is captured, it is possible to decode any application image on any final product, without an effective control by the manufacturer/distributor.

In particular, the techniques using a symmetric key suffer the drawback that a user can transfer the symmetric key from the authorized device onto a different electronic devices and there decrypt and use the application image. In fact, the use of a symmetric key provides that it is not necessary to know the identity of the device that is authorised to use it.

Techniques for encrypting application images that use asymmetric keys, in which the electronic device has a private and a public key. The latter is transferred to the manufacturer/distributor for carrying out the encryption of the application image to be transferred. In this way, only those who have the private key, and then the electronic device, can decrypt an application image previously encrypted by its manufacturer/distributor. However, the cryptography techniques that use an asymmetric key require a computational power that is hard to be handled in an acceptably short time, in particular by embedded systems.

Moreover, both the symmetric key and the asymmetric key cryptography techniques, when applied to an embedded system, are vulnerable in the not improbable case in which a skilled person succeeds to obtain the symmetric key or the private key from the electronic device, respectively. In this case, the skilled person can fully take the manufacturer/distributor's place. Prior art document WO-02/01335-A2 discloses a method and system wherein digital content is distributed and protected by encryption, that digital content including license and individualisation features.The digital content is encryption by a key which itself has been encrypted and/or sealed with a cryptographic hash of meta-data.

Prior art document US-2010/0325735-A1 discloses a system and method for activating use of software on a computing device using a license server configured to receive an activation request including a device identifier and for issuing a license key for activating the software.

### Summary of the invention

It is therefore a subject of the present invention to provide a method for transferring an application from a manufacturer/distributor to an electronic device which allows the manufacturer/distributor to uniquely identify the electronic device.

It is another subject of the invention to provide such a method that prevents a fraudulent transfer of an application onto an unauthorized electronic device, or from an authorized device onto an identical or similar one.

It is another subject of the invention to provide such a method that prevents the fraudulent decoding of encrypted images even if, for some of these encrypted images, an experienced person has been able to reconstruct the decryption key.

It is a particular subject of the invention to provide such a method in which an excessive computing power is not required to a microcontroller embedded in the electronic device for decrypting the application, so as to enable the use of the method with the computing resources that are available in an embedded system.

It is a particular subject of the invention to provide such a method that allows updating the encryption and decryption algorithms, as well as the key generation, by the manufacturer/distributor.

These and further subjects are achieved by a method for transferring an application from a manufacturer or from a distributor to an electronic device, said method comprising the steps of:
- prearranging a device comprising at least one electronic board, which comprises:
   - a microcontroller unit configured for executing a firmware, the microcontroller unit comprising:
      - a memory unit for storing the firmware;
      - a reconfigurable digital circuit block;
      - an on-chip signature block containing an not modifiable and univocal on-chip signature;
      - a memory area configured for storing encrypted application images;
      - a communication interface configured for loading encrypted application images and a corresponding application signature into the memory area;
- prearranging an encryption/decryption key generation algorithm for generating, by the microcontroller unit, an encryption/decryption key, and for encrypting or decrypting application images, the encryption/decryption key generation algorithm included in the firmware or implemented as a hardware functional block whose circuits have been programmed in the reconfigurable digital block circuit;
- prearranging a remote server in which at least one application image resides which comprises:
   - one or more executable programs, encoded and stored so as to let themselves be executed in the microcontroller unit of the electronic board;
   - one or more application data, coded so as to let themselves be memorized on the microcontroller unit;
   - one or more integrity check and identification codes of the application image;
- prearranging, in the remote server, an application signature generated for uniquely identifying the application image;
- generating a component signature in the electronic board for uniquely identifying the electronic board;
- communicating the component signature to the remote server;
- generating the encryption key in the remote server, combining the component signature and the application signature;
- prearranging, in the remote server, an encryption algorithm configured for generating an encrypted application image from the application image using the encryption key;
- prearranging, in the electronic board, a decryption algorithm configured for decrypting the encrypted application image by said decryption key obtainable by combining the component signature and the application signature,
- transfer the encrypted application image from the remote server to the electronic board;
- transfer the application signature to the electronic board;
- generating the decryption key in the electronic board, combining the component signature and the application signature;
- decrypting the encrypted application image in the electronic board using the decryption algorithm and the decryption key, obtaining again the application image, so that it can be executed on the electronic board.

In other words, for encrypting applications to be transferred from a manufacturer/distributor to an electronic device, the method uses two numerical codes:
- a first numerical code, i.e. the component signature, which univocally identifies the electronic device;
- a second numerical code, i.e. the application signature, which identifies univocally the application which can be loaded and executed by the same device.

The method differs from the prior art, which provides encrypting methods using a symmetric or an asymmetric key, because it uses an univocal application signature that is associated with the application image to be transferred to the electronic device, and a component signature that identifies univocally the same electronic device.

Both numerical codes are used for generating an encryption key and, through this, an encrypted application image of the Firmware originally developed, such that a unique data block is obtained that can be used only in a predetermined device.

Once the encrypted application image has been loaded and recorded in the electronic board, the microcontroller unit is able to generate the decryption key using the two numeric codes; it can decrypt the application image and upload it into its own memory unit, where it can be executed; all this only when even the application signature has been acquired through the loading interface.

Through the method according to the invention, it is obtained an encryption of the application image in which the encrypted application image is different for each application, but it is different also for each receiving electronic device, since the encryption/decryption key is univocal, i.e. different for each application and for each final product. On the contrary, the prior art methods use an encrypted application image that:
- is the same for all the applications sold by the same manufacturer/distributor or for all the microcontroller unit, and can be decrypted with the same decryption key for all the applications, or
- is generated starting from the component signature only, for example by using the device public key; therefore, in case the private key is decoded, it becomes possible to decode all the application images that are already present on the same electronic device, losing the effective control by the manufacturer or the distributor.

The combination of an unique device signature and of an unique application signature used to create the encryption/decryption key, which is therefore different for each application and for each receiving device, also prevents an application image from being successfully installed, i.e. maintaining its functionality, onto a different device, even if identical, that belongs to the same production series as the electronic device to which the application is actually addressed.

The method according to the invention allows the dynamic change of the application decryption algorithm, on demand by the manufacturer/distributor of the application, enabling a completely different decoding strategy for each application and for each electronic device. On the contrary, the prior art methods use a fixed encoding/decoding method that is always the same for all the products sold by the same manufacturer/distributor, or for each electronic device.

The step of generating a component signature can comprise the steps of:
- reading an on-chip signature;
- obfuscating the on-chip signature by an obfuscation algorithm.

As an example, the on-chip signature is a die identification number. In this way, as component of the digital signature, it is exploited a unique identification serial number already present on the semiconductor device, created at the time of manufacture and substantially univocal. The die identification number, or die ID, is known as being present in all new generations of microcontroller devices.

Alternatively, the step of generating a component signature comprises the steps of:
- reading an external signature;
- obfuscating the external signature by an obfuscation algorithm.

The component signature can then be generated starting from a unique on-chip signature and, optionally, if the microcontroller unit is not equipped with a unique chip identifier, starting from an on-board device, which generates a unique external signature 205.

According to an embodiment of the present invention, the step of generating a component signature comprises the steps of:
- reading an external signature and an on-chip signature;
- combining the external signature and the on-chip signature by an obfuscating algorithm.

In other words, a unique identification code is generated that identifies the electronic board, and therefore the electronic device, i.e. the component signature, by a combination of hardware, firmware, and a unique on-chip serial number and/or a unique on-board serial number.

In this way, the method according to the invention allows the dynamic modification of the hardware or firmware algorithm which generates the component signature according to the application manufacturer/distributor's requirements. This permit an encoding scheme that is completely different for each electronic device and for each application.

On the contrary, the prior art methods does not use an obfuscation algorithm for generating a unique product identifier that mask and make it impossible to reconstruct the on-chip signature and/or the external signature. Such methods can turn into a vulnerability of security, since they allow reconstructing the product identifier, i.e. the component signature, without having access to the product. Once the application signature is fraudulently obtained, the same application image can be copied and used on more devices of the same product or of similar products, which hinders the manufacturer or the distributor from effectively controlling the application.

The component signature generation algorithm, the decryption key generation algorithm and the decryption algorithm can be implemented, independently from one another, as firmware functional blocks or as hardware functional blocks.

The hardware functional blocks can be fixed blocks. As an alternative, if such functional blocks are loaded in the reconfigurable digital circuit block, they can be changed dynamically, thus implementing a plurality of different obfuscating or decrypting functions.

Preferably, a step is provided of periodically changing at least an algorithm selected from the group consisting of:
- the component signature generating algorithm;
- the decryption key generating algorithm;
- the decryption algorithm.

Advantageously, in order to minimize the resources used in the microcontroller unit for executing the method, the component signature generating algorithm, the decryption key, and the decrypted application image all use a same functional block, wherein this same functional block is implemented using a hardware functional block or using a firmware code.

In particular, functional block used by such algorithms implements an AES128 algorithm (Advanced Encryption Standard at 128 bit), which is present in many families of microcontrollers.

Each of the algorithms for generating the component signature, for generating the decryption key and for reconstructing the original application image, to be used, may be selected out of a library of encryption/decryption algorithms that is already on board of the microcontroller unit, in order to assist in generating new protection strategies.

Advantageously, the microcontroller unit assembled on the electronic board is an embedded microcontroller unit.

### Brief description of the drawings

The invention will be now illustrated with the following description of exemplary embodiments thereof, exemplifying but not limitative, with reference to the accompanying drawings, in which:
- Fig. 1 is a simplified flow-chart of the relevant steps of the method according to the invention;
- Fig. 2 is a block diagram of an application image;
- Fig. 3 is a simplified block diagram of an electronic board;
- Fig. 4 is a simplified block diagram of a microcontroller unit;
- Fig. 5 is a simplified flow-chart that shows the technique for generating an encryption or a decryption key;
- Fig. 6 is a flow-chart of the method for encrypting an application image into an encrypted application image;
- Fig. 7 is a flow-chart of the method for decrypting an encrypted application image;
- Figs. 8,9,10 diagrammatically show exemplary embodiments of the technique of Fig. 5;
- Fig. 11 is a simplified block diagram of the method for updating the application executed on the microcontroller unit;

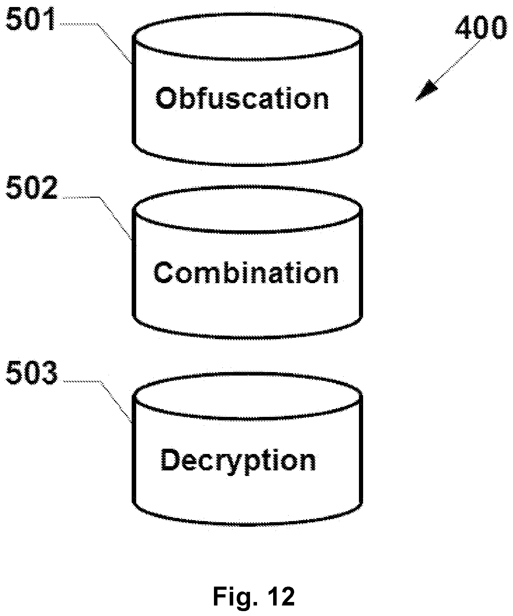

- Fig. 12 is a block diagram of an application image containing hardware or firmware proprietary algorithms, which are suitable for replacing those that are needed for processing the decryption data.

### Description of preferred exemplary embodiments

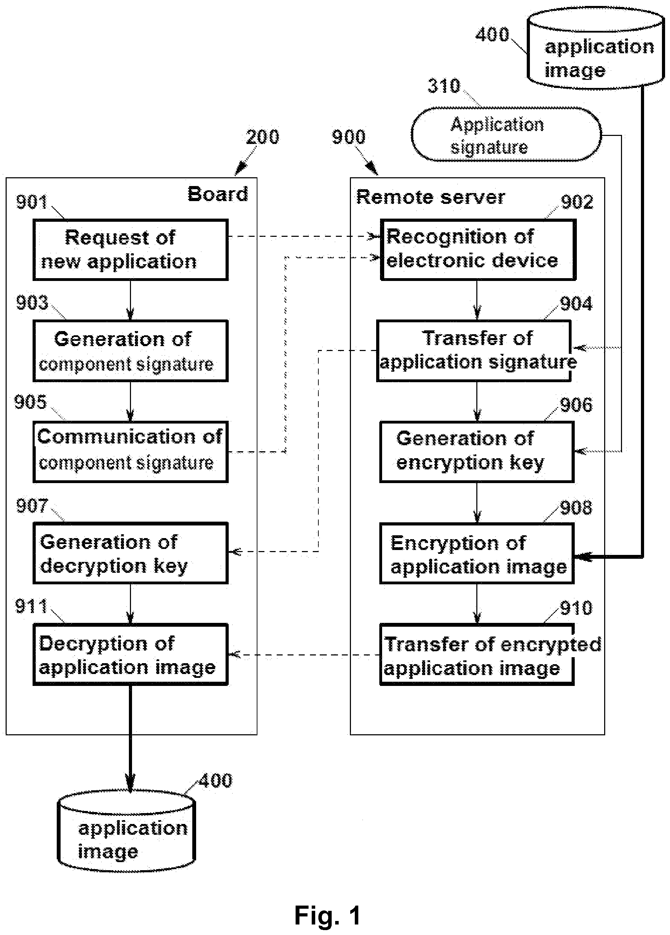

With reference to Fig. 1, a method is described for transferring an application or application image 400 from a manufacturer or from a distributor of such application to an electronic device, for example, in order to implement new functionalities in the electronic device. More in detail, Fig. 1 relates to a process for authorizing and uploading an application image and the related signature on the microcontroller unit.

Application image 400 transfer is carried out through a server 900 that is external and/or remote with respect to the electronic device, in which application image 400 resides, and which is controlled by the manufacturer/distributor of the application.

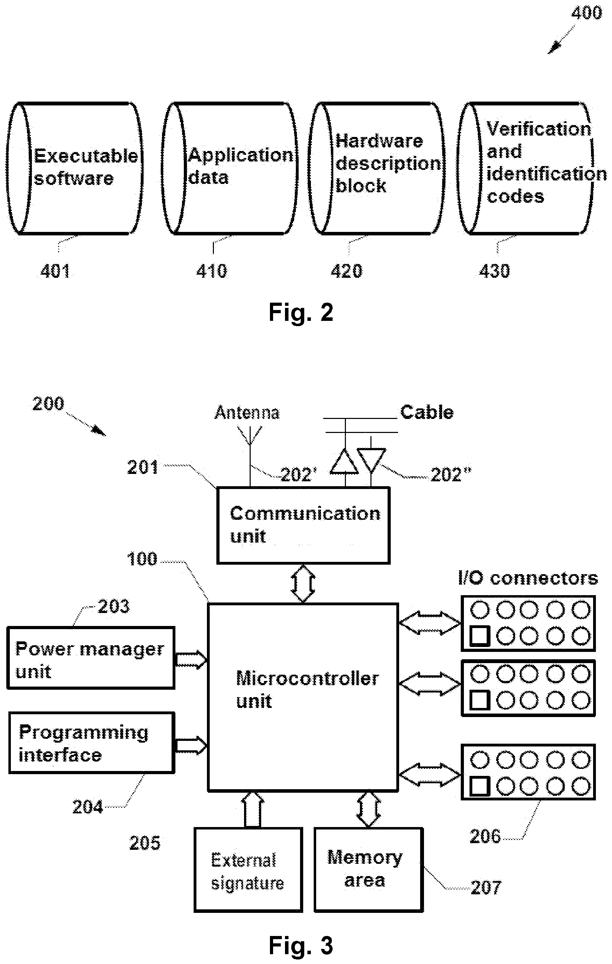

Fig. 2 shows the structure of application image 400, which comprises at least one executable software or application 401, encoded and recorded so as to let themselves be run on the microcontroller unit of the electronic device, described hereafter, and also comprises a data area 410 containing one or more application data blocks that are coded to allow their own memorization in such microcontroller unit, as well as a hardware description block 420 describing the hardware to be used by the application itself. The application image 400 also contains one or more integrity check and identification codes for the checking the integrity, the verification and identification 430 of the application image 400 itself.

An application signature 310 is also prearranged in remote server 900 (Fig. 1), which is associated by the manufacturer or by the distributor to the application, which uniquely identifies the application image 400.

The electronic device comprises at least one electronic board, as shown in Fig. 3, in an exemplary embodiment for an electronic device arranged to communicate via radiofrequency or cable. Electronic board 200 essentially include a microcontroller unit 100, described hereafter more in detail, configured for executing a firmware. The electronic board 200 include also a memory area 207 configured for storing encrypted application images 620, as well as a communication interface 201,204 configured for uploading and memorising such encrypted application images 620 and a corresponding application signature 310 in memory area 207. The memory area 207 may comprise, for instance, a EEPROM or FLASH memory, or a SD card.

An application image 400 can be stored on memorisation unit 207 at manufacturing time, by the manufacturer/distributor, or once after the installation or a first use of the electronic device, by the user of the electronic device. To this purpose, electronic board 200 may include a programming interface 204 and/or a communication unit 201 configured for connecting and for exchanging data through one or more wireless communication channels 202' or cable connected communication channels 202" chosen, as an example, between an Internet connection, a USB key, a serial interface and other well-known type of channels.

The electronic board 200 advantageously also comprises a power manager 203 as well as many input-output connectors 206.

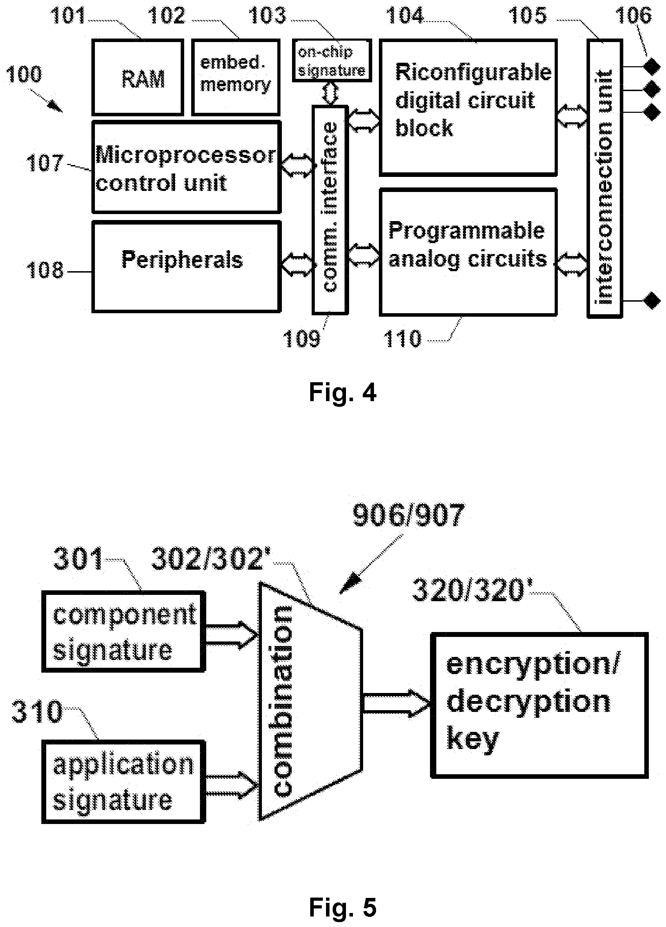

As an example, microcontroller unit 100 of board 200 can be of the embedded type, as shown in Fig. 4, where the block diagram shows a specific system comprising reconfigurable analog and digital blocks that are integrated in a same silicon chip. The microcontroller unit 100 includes essentially a microprocessor control unit 107, a memory unit 101,102 for the storing the firmware and a block 103 containing an unmodifiable on-chip signature that univocally identifies microcontroller unit 100 and, therefore, board 200 and the electronic device which houses it. Microcontroller unit 100 also embeds hardware configurable functional blocks 104,110 that allow implementing analog and digital circuits. In particular, a reconfigurable digital circuit block 104 can be embedded therein. Microcontroller unit 100 may further include analog reconfigurable circuits 110.

An on-chip signature block 103 is associated with a communication interface 109 for communicating with microprocessor unit 107 and/or with circuit blocks 104 and 110. The reconfigurable digital circuit block 104 and/or reconfigurable analog circuit blocks 110 are connected to board 200 via an interconnection unit 105, which is equipped with connection elements such as connection pins 106. The microcontroller unit 100 may also comprise a plurality of peripherals 108.

The application image 400 may be loaded into the memory unit 101, 102 of microcontroller 100, as well as into one of the mass storage 207 that is present on electronic board 200.

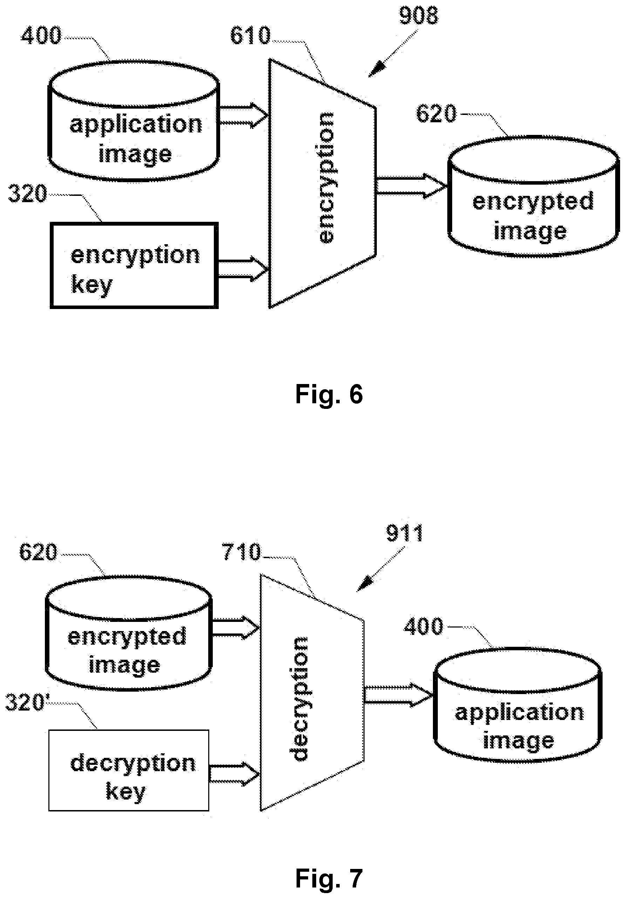

Still with reference to Fig. 1, algorithms 302 and 302' (Fig. 5) are arranged on remote server 900 and on electronic board 200 for generating an encryption/decryption key 320,320', respectively, as well as algorithms 610 and 710 (Figs. 6 and 7) for encrypting unencrypted application images 400 or for decrypting encrypted application images 620, respectively.

The process for generating encryption key 320 or decryption key 320' is shown in the flow-diagram of Fig. 5. According to the invention, algorithms 302/302' for generating encryption/decryption keys 320/320' provide a step of combining application signature 310 with a component signature 301 that uniquely identifies electronic board 200. More in detail, algorithms 302/302', also indicated as combiner block, implement algorithms that combine component signature 301 and application signature 310, which is generated for each application image 400 by the manufacturer/ distributor and return encryption key 320 and decryption key 320', respectively.

Since encryption and decryption key 320 generated according to the present invention is produced by involving the software, the hardware, a component signature 301 and an application signature 310, key 320 is different not only from a chip to another, but also from an application image to another application image.

In particular, the algorithm 302' for generating the decryption key 320' can be created as a firmware functional block memorised in storage unit 101/102 of microcontroller unit 100, or can be implemented as a hardware functional block in reconfigurable digital circuit block 104 of microcontroller unit 100. The hardware functional block can be fixed or, when it is loaded on reconfigurable on-chip digital circuit block 104, can change dynamically, implementing a plurality of different decryption functions.

The methods for encrypting application image 400 and for decrypting encrypted application image 620 are shown in the flow diagrams of Figs. 6 and 7, respectively.

In an exemplary embodiment, encryption algorithm 610 arranged in remote server 900 is configured for generating an encrypted application image 620 starting from application image 400, by unique encryption key 320 (Fig. 6).

Similarly, decryption algorithm 710 arranged in electronic board 200 is configured for decrypting encrypted application image 620 by unique decryption key 320', recreating or rather reconstructing original application image 400 (Fig. 7) that can be uploaded into microcontroller unit 100.

In order to implement encryption block 710, a firmware procedure can be used. In another embodiment, a hardware digital circuit is used for implementing decryption block 710. In particular, decryption block 710 uses AES128 functions as decrypting algorithms. The decryption block uses AES128 algorithms for the encrypted application image 620 elaboration, and uses decryption key 320 of 128 bits for correctly restoring application image 400. As an alternative, specific algorithms can be used, which may be incorporated both in the hardware and in the firmware of microcontroller unit 100. In such a case, the application manufacturer/ distributor maintains a full control and can therefore take the decision on how to elaborate encrypted application image 620 in order to properly reconstruct application image 400.

The component signature 301 can be generated through the component signature generation algorithm 303, which can also be implemented as a firmware functional block or as a hardware functional block. The hardware functional block can be fixed or, when it is loaded on the on-chip reconfigurable digital circuit block 104, can be dynamically changed, thus implementing a plurality of different decryption algorithms.

Still with reference to Fig. 1, the method according to the invention may start by a request 901 of a new application 400, which is formulated through electronic board 200 and is addressed to remote server 900, through one of the communication channels 202',202",. Upon receiving the request, remote server 900 executes a step 902 of recognizing and/or authorizing electronic device 200, i.e. the device requesting a new application 400.

The process 900 comprises then a step 903 of generating, in electronic board 200, component signature 301, which uniquely identifies electronic board 200. The step 903 of generating component signature 301 follows step 901 of requesting the application to remote server 900.

After generating the component signature 301, the method proceeds with a step 905 that communicates the component signature 301 to the remote server 900, carried out by electronic board 200, through one of the communication channels 202',202", or by the user of the electronic device.

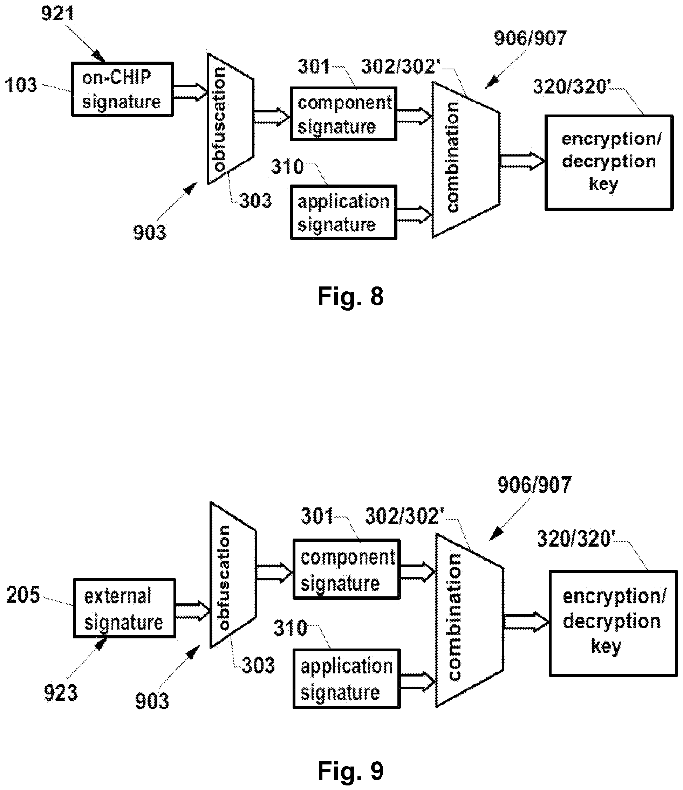

The step 903 of generating the component signature 301 will be described below, in some exemplary embodiments, with reference to Figs. 8, 9, 10.

The remote server 900, upon acceptance 902 of request 901 for updating, carries out a step 906 of generating encryption key 320, through a combination 302 of the component signature 301, as received from the electronic board 200 or from the user of the electronic device, and of the application signature 310 already available in server 900, according to the process described with reference to Fig. 5.

The thus obtained encryption key 320 is used by the remote server 900 for carrying out step 908 of encrypting the application image 400, by means of the encryption algorithm 610, as described with reference to Fig. 6, thus obtaining a corresponding encrypted application image 620.

Subsequently, the remote server 900 performs the steps 904,910 of transferring the application signature 310 and the encrypted application image 620 to the electronic board 200 or to the user of the electronic device, respectively. Since the application signature 310 is not transmitted at the same time as the component signature, it is prevented from being directly read by unauthorized people.

Then, the electronic board 200 performs a step 907 of generating the decryption key 320', through a combination 302', according to the process of Fig. 5, of the component signature 301 generated by itself, and of the application signature 310 received from server 900.

The so obtained decryption key 320' is used by the electronic board 200, in particular by the elaboration unit 107 of the microprocessor unit 100, for carrying out a step 911 of decrypting the encrypted application image 620, by mean of the decryption algorithm 710, described with reference to Fig. 7, thus recreating the original application image 400, unencrypted. This allows the linker or the boot loader to upload all the necessary modules into the microcontroller unit 100.

At this point, the microprocessor unit 100, by running a special program already present on board of its own executable memory 101, can load the Firmware into the embedded memory 102, such as a RAM memory, or a FLASH memory, etc., and can execute the Firmware of the application.

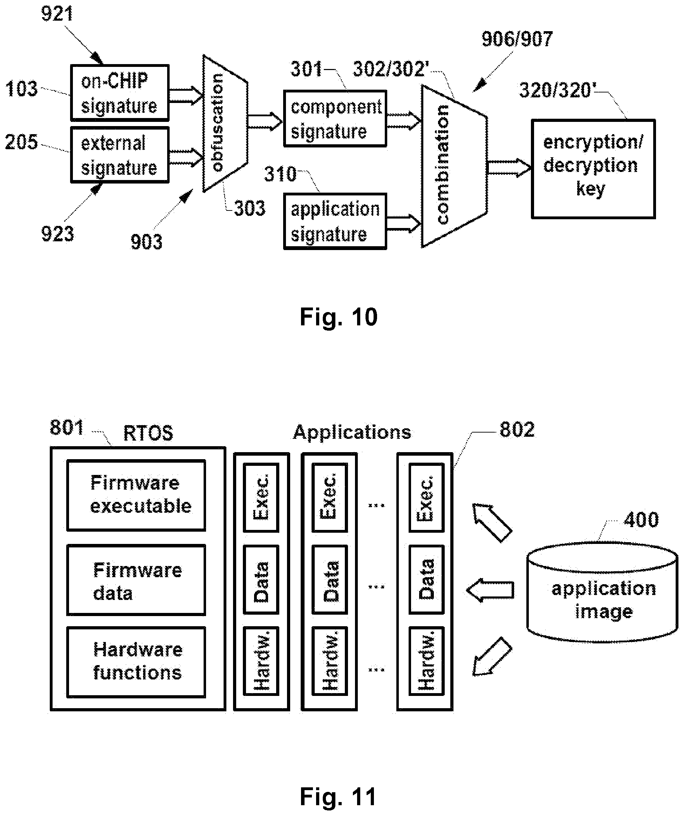

More in detail, with reference to Fig. 2 and to Fig. 11, the application image 400 may contain a full firmware or hardware description that can fully replace the one that is resident in the microprocessor unit 100, or the application image can contain a single application to be added to the resident real-time operating system. In order to enable a new functionality of the electronic device, the application image 400 is read and divided into components 401, 410 and 420, previously described, which are loaded into a proper memory area 802 of the microcontroller. Each application image 400, as defined by the manufacturer or the distributor, can completely reconfigure the microcontroller unit 100, by replacing each reconfigurable part thereof or, using a special application commonly called linker, can be added to the current microcontroller configuration or replace a portion 801 thereof RTOS.

Briefly, the decryption step 911 and the execution of an application are feasible only when the application signature 310, has been acquired through an external source, which may even be different from the one through which the encrypted application image 620 has been obtained, such as an Internet connection, a USB key, or an input user interface.

In the exemplary embodiment of Fig. 8, step 903 of generating the component signature 301 in the electronic board 200 comprises step 911 of reading unmodifiable and univocal on-chip signature 103, for instance a die identification number, which is contained in block 103 of the microcontroller unit 100, and also comprises a step 912 of obfuscating on-chip signature 103 through a component signature generation algorithm 301, which executes an obfuscation algorithm 303.

In another exemplary embodiment, shown in Fig. 9, step 903 of generating the component signature 301 in the electronic board 200 comprises a step 913 of reading an external signature 205, and a step 914 of obfuscating the external signature 205 through a component signature 301 generation algorithm, which executes an obfuscation algorithm 303.

Still in another exemplary embodiment, as shown in Fig. 10, step 903 of generating the component signature 301 in the electronic board 200 comprises steps 911,913 of reading the on-chip signature 103 and the external signature 205, and a step 916 of combining the external signature 205 and the on-chip signature 103 through a component signature 301 generation algorithm, which executes an obfuscation algorithm 303.

More in detail, obfuscation algorithm or propagation block 303 is a procedure that reads the value of the on-chip signature 103 that is present in the microcontroller and/or the external signature 205, and modifies these values by means of a combination thereof, in the specific case in which both of them are provided and, through a special algorithm, generates the component signature 301.

The algorithm 303 generating the component signature 301, for example the obfuscation algorithm 303, can be implemented as a firmware functional block stored in the memory unit 101/102 of the microcontroller unit 100, or as a hardware functional block. The hardware functional block can be fixed, or, when it is loaded on reconfigurable on-chip digital circuit block 104, can be dynamically changed, which makes it possible to implement a plurality of different decryption functions.

In particular, all algorithms 303,302',710 for generating component signature 301, decryption key 320', and decrypted image 400, respectively, use the same functional block, whether this is implemented using a hardware functional block, or using a firmware code.

In particular, both propagation block 303 and mixing block 302' use a firmware procedure. As an alternative, both propagation block 303 and mixing block 302' use hardware digital circuits.

In an exemplary embodiment of the invention, a step is provided of periodically changing at least one algorithm selected from the group consisting of: decryption key 320' generation algorithm 302'; component signature 301 generation algorithm 303; decryption algorithm 710.

In particular, the functional block 302',303,710 implements an AES128 algorithm, Advanced Encryption Standard at 128 bit, as the decrypting algorithm, in which a block size of 128 bit and a key size of 128 bit are used.

In this case, for the propagator block 303, on-chip signature 103 of 128 bit is used as the data block, and external signature 205 of 128 bit is used as the key or, when an external signature is not present, a pre-defined 128 bit signature is used as the key, programmed at manufacturing time. For mixing block 302, component signature 301 of 128 bit is used as the data block, and application signature 310 of 128 bit is used as the key.

For instance, the propagation block 303 and the mixing block 302 use on-chip signature 103, external signature 205 and application signature 310 in any combination, in order to create encryption key or final decryption key 320 through multiple use of AES128 functional block.

As an alternative, each of propagation block 303 and mixing block 302' uses a specific algorithm, both implemented in the configurable hardware functional blocks 104,110 or in the firmware stored in internal memory 101,102 of microcontroller unit 100 different for propagator block 303 and for mixing block 302'. In this exemplary embodiment, the manufacturer or the distributor of the product maintains a full control and can decide how to elaborate on-chip signature 103 and/or external signature 205 and final decryption key 320.

In particular, each algorithm 303',302,710 is selected out of an encryption/decryption algorithm library, said library being embedded in the microcontroller unit 100.

The above description of embodiments of the invention is able to show the invention from the conceptual point of view, so that others, by applying current knowledge, will be able to modify and / or adapt such specific embodiments for various applications without further research and without departing from the inventive concept and, therefore to be understood that such adaptations and modifications will be considered as equivalent to the specific embodiments. The means and the materials to realize the different functions described herein could have a different nature without departing from the scope of the invention. It is understood that the phraseology or terminology employed descriptive purposes only and, for this reason, not limiting.

## Claims

1. A method for transferring an application software from a producer/distributor to an electronic device, said method comprising the steps of:
- prearranging an electronic device comprising at least one electronic board (200) comprising:
- a microcontroller unit (100) configured for running a firmware, said microcontroller unit (100) comprising:
- an memory unit for storing said firmware (101,102);
- a reconfigurable digital circuit block (104);
- an on-chip signature block (103) containing an unmodifiable and univocal on-chip signature;
- a memory area (207) configured for storing encrypted application images (620);
- a loading interface (204,201) configured for loading encrypted application images (620) and a corresponding application signature (310) into said memory area (207);
- prearranging an encryption/decryption key generation algorithm (302,302') for generating, by said microcontroller unit (100), an encryption/decryption key (320,320'), and for encrypting or decrypting application images, said encryption/decryption key generation algorithm (302,302') being included in said firmware or implemented as a hardware functional block whose circuits are configured in said reconfigurable digital circuit block (104);
- prearranging a remote server (900) in which at least one application image (400) resides, which comprises:
- one or more executable programs (401), coded and recorded so as to let themselves be run in said microcontroller unit (100) of said electronic board (200);
- one or more application data (410), coded so as to let themselves be memorized in said microcontroller unit (100);
- one or more check and identification codes of said application image (400);
- prearranging, in said remote server (900), an application signature (310) generated for uniquely identifying said application image (400);
- generating (903) a component signature (301) in said electronic board (200) for uniquely identifying said electronic board (200);
- communicating (905) said component signature (301) to said remote server (900);
- generating (906) said encryption key (320) in said remote server (900) by combining said component signature (301) and said application signature (310);
- prearranging, in said remote server (900), an encryption algorithm (610) configured for generating an encrypted application image (620) from said application image (400) by said encryption key (320);
- prearranging, in said electronic board, (200) a decryption algorithm (710) configured for decrypting said encrypted application image (620) by said decryption key (320) obtainable by combining said component signature (301) and said application signature (310),
- transferring (910) said encrypted application image (620) from said remote server (900) to said electronic board (200);
- transferring (904) said application signature (310) to said electronic board (200);
- generating (907) said decryption key (320') in said electronic board (200) by combining said component signature (301) and said application signature (310);
- decrypting (911) said encrypted application image (620) in said electronic board (200) by said decryption algorithm (710) and said decryption key (320'), obtaining again said application image (400) in such a way that said application image (400) may be run on said electronic board (200).

2. The method according to claim 1, wherein said step of generating (903) a component signature (301) comprises the steps of:
- reading an on-chip signature (103);
- obfuscating said on-chip signature (103) by an obfuscation algorithm (303).

3. The method according to claim 1, wherein said step of generating (903) a component signature (301) comprises the steps of:
- reading an external signature (205);
- obfuscating said external signature (205) by an obfuscation algorithm (303).

4. The method according to claim 1, wherein said step of generating (903) a component signature (301) comprises the steps of:
- reading an external signature (205) and an on-chip signature (103);
- combining said external signature (205) and said on-chip signature (103) by an obfuscation algorithm (303).

5. The method according to claim 1, wherein said on-chip signature (103) is a die identification number.

6. The method according to claim 1, wherein said step of generating (903) a component signature (301) is carried out by a component signature generation algorithm (303), wherein said step of generating (907) a decryption key (320') is carried out by a decryption key generation algorithm (302'),
wherein said component signature generation algorithm (303), said decryption key generation algorithm (302') and said decryption algorithm (710) are made, independently from one another, as functional blocks selected from the group consisting of:
- firmware functional blocks;
- hardware functional blocks selected from the group consisting of:
- fixed hardware functional blocks;
- functional blocks configured for being dynamically modified so as to implement a plurality of different decryption functions, if said functional blocks are loaded on said reconfigurable on-chip digital circuit block (104).

7. The method according to claim 1, wherein said step of generating (903) a component signature (301) is carried out by a component signature generation algorithm (303), wherein said step of generating (907) a decryption key (320') is carried out by a decryption key generation algorithm (302'),
wherein a step is provided of periodically changing at least one algorithm selected from the group consisting of:
- said component signature generation algorithm (303);
- said decryption key generation algorithm (302');
- said decryption algorithm (710).

8. The method according to claim 1, wherein said algorithms (303,302,710) for generating said component signature (301), said decryption key (320'), and said decrypted application image (400) all use a same functional block,
wherein said same functional block is implemented using a hardware functional block or using a firmware code.

9. The method according to claim 8, wherein said same functional block implements an AES128 algorithm (Advanced Encryption Standard at 128 bit).

10. The method according to claim 1, wherein each algorithm (303,302,710) for generating said component signature (301), said decryption key (320'), and said decrypted application image (400) is selected from a library of encryption/decryption algorithms that are resident on said microcontroller unit (100).

11. The method according to claim 1, wherein said microcontroller unit (100) of said electronic board (200) is an embedded microcontroller unit.

## Patentansprüche

1. Verfahren zum Übertragen einer Anwendungssoftware von einem Hersteller/Distributor zu einer elektronischen Vorrichtung, wobei das Verfahren die Schritte enthält:
- Vorarrangieren einer elektronischen Vorrichtung, die wenigstens elektronische Platine (200) enthält, die enthält:
- eine Mikrosteuerungseinheit (100), die konfiguriert ist, um eine Firmware laufen zu lassen, wobei die Mikrosteuerungseinheit (100) enthält:
- eine Speichereinheit zum Speichern der Firmware (101, 102);
- einen rekonfigurierbaren digitalen Schaltungsblock (104);
- einen auf einem Chip ausgeführten Signaturblock (103) der eine unmodifizierbare und eindeutige Signatur auf dem Chip enthält;
- einen Speicherbereich (207), der konfiguriert ist, um verschlüsselte Anwendungsbilder (620) zu speichern;
- ein Lade-Interface (204, 201), das konfiguriert ist, um verschlüsselte Anwendungsbilder (620) und eine entsprechende Anwendungssignatur (310) in den Speicherbereich (207) zu laden;
- Vorarrangieren eines Verschlüsselungs-/Entschlüsselungs-Schlüssel-Erzeugungsalgorithmus (302, 302'), um durch die Mikrosteuerungseinheit (100) einen Verschlüsselungs-/Entschlüsselungs-Schlüssel (320, 320') zu erzeugen und Anwendungsbilder zu verschlüsseln oder entschlüsseln, wobei der Verschlüsselungs-/Entschlüsselungs-Schlüssel-Erzeugungsalgorithmus (302, 302') in der Firmware enthalten ist oder als ein Hardware-Funktionsblock implementiert ist, dessen Schaltungen in dem rekonfigurierbaren digitalen Schaltungsblock (104) konfiguriert sind;
- Vorbereiten eines Remote-Servers (900), in dem wenigstens ein Anwendungsbild (400) untergebracht ist, das enthält:
- ein oder mehrere ausführbare(s) Programm(e) (401), das so codiert und aufgezeichnet ist, damit es/sie selbst in der Mikrosteuerungseinheit (100) der elektronische Platine (200) laufen gelassen werden;
- eine oder mehrere Anwendungsdate(n) (410), die so codiert sind, damit sie selbst in der Mikrosteuerungseinheit (100) gespeichert gelassen werden;
- einen oder mehrere Prüf- und IdentifikationsCode(s) des Anwendungsbildes (400);
- Vorarrangieren einer Anwendungssignatur (310), die zum eindeutigen Identifizieren des Anwendungsbildes (400) erzeugt wird, in dem Remote-Server (900);
- Erzeugen (903) einer Komponentensignatur (301) in der elektronischen Platine (200) zum eindeutigen Identifizieren der elektronischen Platine (200);
- Kommunizieren (905) der Komponentensignatur (301) zu dem Remote-Server (900);
- Erzeugen (906) des Verschlüsselungs-Schlüssels (320) in dem Remote-Server (900) durch Kombinieren der Komponentensignatur (301) und der Anwendungssignatur (310);
- Vorarrangieren eines Verschlüsselungsalgorithmus (610), das zum Erzeugen eines verschlüsselten Anwendungsbildes (620) von dem Anwendungsbild (400) durch den Verschlüsselungs-Schlüssels (320) in dem Remote-Server (900);
- Vorarrangieren eines Entschlüsselungsalgorithmus (710), das Entschlüsseln des verschlüsselten Anwendungsbildes (620) durch den Entschlüsselungs-Schlüssel (320), der durch Kombinieren der Komponentensignatur (301) und der Anwendungssignatur (310) erhaltbar ist, in der elektronischen Platine (200);
- Übertragen des verschlüsselten Anwendungsbildes (620) von dem Remote-Server (900) zu der elektronischen Platine (200);
- Übertragen der Anwendungssignatur (310) zu der elektronischen Platine (200);
- Erzeugen (907) des Entschlüsselungs-Schlüssels (320') in der elektronischen Platine (200) durch Kombinieren der Komponentensignatur (301) und der Anwendungssignatur (310);
- Entschlüsseln (911) des verschlüsselten Anwendungsbildes (620) in der elektronischen Platine (200) durch den Entschlüsselungsalgorithmus (710) und den Entschlüsselungs-Schlüssel (320'), wodurch wieder das Anwendungsbild (400) in einer solchen Weise erhalten wird, dass das Anwendungsbild (400)auf der elektronischen Platine (200)laufen gelassen werden kann.

2. Verfahren nach Anspruch 1, wobei der Schritt des Erzeugens (903) einer Komponentensignatur (301) die Schritte enthält:
- Lesen einer auf einem Chip ausgeführten Signatur (103);
- Verschleiern der auf einem Chip ausgeführten Signatur (103) durch einen Verschleierungsalgorithmus (303).

3. Verfahren nach Anspruch 1, wobei der Schritt des Erzeugens (903) einer Komponentensignatur (301) die Schritte enthält:
- Lesen einer externen Signatur (205);
- Verschleiern der externen Signatur (205) durch einen Verschleierungsalgorithmus (303).

4. Verfahren nach Anspruch 1, wobei der Schritt des Erzeugens (903) einer Komponentensignatur (301) die Schritte enthält:
- Lesen einer externen Signatur (205) und einer auf einem Chip ausgeführten Signatur (103);
- Kombinieren der externen Signatur (205) und der auf einem Chip ausgeführten Signatur (103) durch einen Verschleierungsalgorithmus (303).

5. Verfahren nach Anspruch 1, wobei die auf einem Chip ausgeführte Signatur (103) eine vergängliche Identifikationsnummer ist.

6. Verfahren nach Anspruch 1, wobei der Schritt des Erzeugens (903) einer Komponentensignatur (301) von einem Komponentensignatur-Erzeugungsalgorithmus (303) ausgeführt wird, wobei der Schritt des Erzeugens (907) eines Entschlüsselungs-Schlüssels (320') von einem Entschlüsselungs-Schlüssel-Erzeugungsalgorithmus (302') ausgeführt wird, wobei der Komponentensignatur-Erzeugungsalgorithmus (303), Entschlüsselungs-Schlüssel-Erzeugungsalgorithmus (302') und der Entschlüsselungsalgorithmus (710) unabhängig voneinander als funktionale Blöcke ausgeführt sind, die ausgewählt werden aus der Gruppe, die besteht aus:
- Firmware-Funktionsblöcke;
- Hardware-Funktionsblöcke die ausgewählt werden aus der Gruppe, die besteht aus:
- fixierte Hardware-Funktionsblöcke;
- Hardware-Funktionsblöcke, die konfiguriert sind, um dynamisch modifiziert zu werden, um eine Mehrzahl von verschiedenen Entschlüsselungsfunktionen zu implementieren, wenn die funktionalen Blöcke in den rekonfigurierbaren digitalen Schaltungsblock (104) auf einem Chip geladen werden.

7. Verfahren nach Anspruch 1, wobei der Schritt des Erzeugens (903) einer Komponentensignatur (301) von einem Komponentensignatur-Erzeugungsalgorithmus (303) ausgeführt wird, wobei der Schritt des Erzeugens (907) eines Entschlüsselungs-Schlüssels (320') von einem Entschlüsselungs-Schlüssel-Erzeugungsalgorithmus (302') ausgeführt wird, wobei ein Schritt eines periodischen Änderns wenigstens eines Algorithmus vorgesehen ist, der ausgewählt werden aus der Gruppe, die besteht aus:
- dem Komponentensignatur-Erzeugungsalgorithmus (303);
- dem Entschlüsselungs-Schlüssel-Erzeugungsalgorithmus (302');
- dem Entschlüsselungsalgorithmus (710).

8. Verfahren nach Anspruch 1, wobei die Algorithmen (303, 302, 710) zum Erzeugen der Komponentensignatur (301), des Entschlüsselungsschlüssels (320') und des entschlüsselten Anwendungsbildes (400) alle einen gemeinsamen funktionalen Block nutzen,
wobei der gemeinsame funktionale Block unter Verwendung eines Hardware-Funktionsblockes oder unter Verwendung eines Firmware-Codes implementiert wird.

9. Verfahren nach Anspruch 8, wobei der gemeinsame funktionale Block einen AES128 Algorithmus (Erweiterter Verschlüsselungsstandard mit 128 Bit) implementiert.

10. Verfahren nach Anspruch 1, wobei jeder Algorithmus (303, 302, 710) zum Erzeugen der Komponentensignatur (301), des Entschlüsselungsschlüssels (320') und des entschlüsselten Anwendungsbildes (400) ausgewählt wird aus einer Bibliothek von Verschlüsselungs-/Entschlüsselungs-Algorithmen, die auf der Mikrosteuerungseinheit (100) untergebracht sind.

11. Verfahren nach Anspruch 1, wobei die Mikrosteuerungseinheit (100) der elektronischen Platine (200) eine eingebettete Mikrosteuerungseinheit ist.

## Revendications

1. Un procédé de transfert d'un logiciel d'application, d'un producteur/distributeur à un dispositif électronique, ledit procédé comprenant les étapes consistant à :
- préparer un dispositif électronique comprenant au moins une carte électronique (200) comprenant :
• une unité microcontrôleur (100) configurée pour fonctionner avec un progiciel, ladite unité microcontrôleur (100) comprenant :
* une unité de mémoire pour stocker ledit progiciel (101, 102) ;
* un bloc de circuit numérique reconfigurable (104) ;
* un bloc de signature sur puce (103) contenant une signature sur puce non modifiable et univoque ;
• une zone mémoire (207) configurée pour stocker des images d'application cryptées (620) ;
• une interface de chargement (204, 201) configurée pour charger des images d'application cryptées (620) et une signature d'application correspondante (310) dans ladite zone mémoire (207) ;
- préparer un algorithme de génération de clé de cryptage/décryptage (302, 302') pour générer, par ladite unité microcontrôleur (100), une clé de cryptage/décryptage (320, 320'), et pour crypter ou décoder des images d'application, ledit algorithme de génération de clé de cryptage/décryptage (302, 302') étant inclus dans ledit progiciel ou implémenté comme un bloc fonctionnel matériel dont les circuits sont configurés dans ledit bloc de circuit numérique reconfigurable (104) ;
- préparer un serveur distant (900) dans lequel réside au moins une image d'application (400), qui comprend :
• un ou plusieurs programmes exécutables (401), codés et enregistrés de façon à se laisser exécuter dans ladite unité microcontrôleur (100) de ladite carte électronique (200) ;
• une ou plusieurs données d'application (410), codées de façon à se laisser mémoriser dans ladite unité microcontrôleur (100) ;
• un ou plusieurs codes de contrôle et d'identification de ladite image d'application (400) ;
- préparer, dans ledit serveur distant (900), une signature d'application (310) générée pour identifier de façon univoque ladite image d'application (400) ;
- générer (903) une signature de composant (301) dans ladite carte électronique (200) pour identifier de façon univoque ladite carte électronique (200) ;
- communiquer (905) ladite signature de composant (301) audit serveur distant (900) ;
- générer (906) ladite clé de cryptage (320) dans ledit serveur distant (900) en combinant ladite signature de composant (301) et ladite signature d'application (310) ;
- préparer, dans ledit serveur distant (900), un algorithme de cryptage (610) configuré pour générer une image d'application cryptée (620) à partir de ladite image d'application (400) par ladite clé de cryptage (320) ;
- préparer, dans ladite carte électronique (200), un algorithme de décryptage (710) configuré pour décrypter ladite image d'application cryptée (620), par ladite clé de décryptage (320) pouvant être obtenue en combinant ladite signature de composant (301) et ladite signature d'application (310) ;
- transférer (910) ladite image d'application cryptée (620), dudit serveur distant (900) à ladite carte électronique (200) ;
- transférer (904) ladite signature d'application (310) à ladite carte électronique (200) ;
- générer (907) ladite clé de décryptage (320') dans ladite carte électronique (200) en combinant ladite signature de composant (301) et ladite signature d'application (310) ;
- décrypter (911) ladite image d'application cryptée (620) dans ladite carte électronique (200) par ledit algorithme de décryptage (710) et ladite clé de décryptage (320'), obtenant à nouveau ladite image d'application (400) de façon que ladite image d'application (400) puisse être représentée sur ladite carte électronique (200).

2. Le procédé selon la revendication 1, dans lequel ladite étape de génération (903) d'une signature de composant (301) comprend les étapes consistant à :
- lire une signature sur puce (103);
- masquer ladite signature sur puce (103) par un algorithme d'obscurcissement (303).

3. Le procédé selon la revendication 1, dans lequel ladite étape de génération (903) d'une signature de composant (301) comprend les étapes consistant à :
- lire une signature externe (205) ;
- masquer ladite signature externe (205) par un algorithme d'obscurcissement (303).

4. Le procédé selon la revendication 1, dans lequel ladite étape de génération (903) d'une signature de composant (301) comprend les étapes consistant à :
- lire une signature externe (205) et une signature sur puce (103) ;
- combiner ladite signature externe (205) et ladite signature sur puce (103) par un algorithme d'obscurcissement (303).

5. Le procédé selon la revendication 1, dans lequel ladite signature sur puce (103) est un numéro d'identification de puce sur circuit intégré.

6. Le procédé selon la revendication 1, dans lequel ladite étape de génération (903) d'une signature de composant (301) est réalisée par un algorithme de génération de signature de composant (303), dans lequel ladite étape de génération (907) d'une clé de décryptage (320') est effectuée par un algorithme de génération de clé de décryptage (302'),
où ledit algorithme de génération de signature de composant (303), ledit algorithme de génération de clé de décryptage (302') et ledit algorithme de décryptage (710) sont réalisés, indépendamment l'un de l'autre, sous forme de blocs fonctionnels sélectionnés dans le groupe comprenant :
- des blocs fonctionnels de progiciels ;
- des blocs fonctionnels de matériels choisis dans le groupe comprenant :
• des blocs fonctionnels de matériels fixes ;
• des blocs fonctionnels configurés pour être modifiés dynamiquement de façon à implémenter une pluralité de fonctions de décryptage différentes, si lesdits blocs fonctionnels sont chargés sur ledit bloc de circuit numérique sur puce reconfigurable (104).

7. Le procédé selon la revendication 1, dans lequel ladite étape de génération (903) d'une signature de composant (301) est réalisée par un algorithme de génération de signature de composant (303), dans lequel ladite étape de génération (907) d'une clé de décryptage (320') est effectuée par un algorithme de génération de clé de décryptage (302'),
où est prévue une étape consistant à modifier périodiquement au moins un algorithme sélectionné dans le groupe constitué :
• du dit algorithme de génération de signature de composant (303) ;
• du dit algorithme de génération de clé de décryptage (302') ;
• du dit algorithme de décryptage (710).

8. Le procédé selon la revendication 1, dans lequel lesdits algorithmes (303, 302, 710) pour générer ladite signature de composant (301), ladite clé de décryptage (320') et ladite image d'application décryptée (400) utilisent tous un même bloc fonctionnel,
où ledit même bloc fonctionnel est implémenté à l'aide d'un bloc fonctionnel matériel ou d'un code de progiciel.

9. Le procédé selon la revendication 8, dans lequel ledit même bloc fonctionnel implémente un algorithme AES128 (Advanced Encryption Standard à 128 bits).

10. Le procédé selon la revendication 1, dans lequel chaque algorithme (303, 302, 710) pour générer ladite signature de composant (301), ladite clé de décryptage (320'), et ladite image d'application décryptée (400) est sélectionné dans une bibliothèque d'algorithmes de cryptage/décryptage qui sont contenus dans ladite unité microcontrôleur (100).

11. Le procédé selon la revendication 1, dans lequel ladite unité microcontrôleur (100) de ladite carte électronique (200) est une unité microcontrôleur intégrée.
